# EUROPÄISCHE PATENTSCHRIFT

(11) **EP 2 671 379 B1**
(45) Veröffentlichungstag und Bekanntmachung des Hinweises auf die Patenterteilung: **29.11.2017**
(21) Anmeldenummer: 11804716.6
(22) Anmeldetag: 30.12.2011
(51) Int. Cl.: H04N 7/18

(54) **VORRICHTUNG UND VERFAHREN ZUR OPTISCHEN AUFNAHME DES UNTERBODENS EINES FAHRZEUGS**
APPARATUS AND METHOD FOR THE IMAGING OF A VEHICHE UNDERCARRIAGE
PROCEDE ET DISPOSITIF D'ENREGISTREMENT OPTIQUE DE DESSOUS D'UNE CARROSSERIE DE VÉHICULE

(30) Priorität: 03.02.2011 DE 102011003553
(43) Veröffentlichungstag der Anmeldung: 11.12.2013
(73) Patentinhaber: Robert Bosch GmbH, 70442 Stuttgart (DE)
(72) Erfinder: HOELLMANN, Manuel, 73574 Iggingen (DE); WENDT, Axel, 70599 Stuttgart (DE)
(86) Internationale Anmeldenummer: PCT/EP2011/074321
(87) Internationale Veröffentlichungsnummer: WO 2012/103999

(56) Entgegenhaltungen:
- WO-A1-2006/059998
- WO-A2-2006/091874

## Beschreibung

Die Erfindung betrifft eine messtechnische Vorrichtung und ein Verfahren zur videobasierten Aufnahme des Unterbodens eines Fahrzeugs, insbesondere eines Kraftfahrzeugs.

### Stand der Technik:

Für die optische Erfassung des Unterbodens eines Fahrzeugs sind verschiedene Systeme bekannt. Diese Systeme werden im Bereich der Sicherheitstechnik, siehe z.B. "Gatekeeper Security, http://www.gatekeepersecurity.com und Advanced Detection Technology, http://advanced-detection.technology.com" vertrieben und verfügen neben einer optischen Erfassungseinheit in der Regel über weitere Diagnoseeinheiten z.B. zur Fahrzeugidentifikation oder zum Detektieren von Gefahrenstoffen, Personen, usw. Die Offenlegungsschrift WO 2006/091874 A2 offenbart ein System zum optischen Aufnahmen von Unterboden eines Fahrzeugs mithilfe einer Kamera und multipel Spiegel. US 2006/0170768 A1 offenbart ein mobiles System zur Inspektion des Unterbodens des Fahrzeugs mit einer Plattform, auf der mehrere Sensoren angebracht sind, und einer Datenanalysevorrichtung, um die von den Sensoren gelieferten Daten auszuwerten. Die Sensoren tasten den Unterboden des Fahrzeugs ab, indem sie sich relativ zu der Plattform bewegen.

US 2007/0040911 A1 offenbart ein System zur Betrachtung des Unterbodens eines Fahrzeugs mit einer einzelnen Kamera, die eingerichtet ist, ein Bild, das die gesamten Breite des Unterbodens des Fahrzeugs umfasst, aufzunehmen. Die Kamera hat entlang der optischen Achse der Kamera einen Beobachtungsabstand vom Unterboden des Fahrzeugs, der größer als der euklidische Abstand zwischen der Kamera und dem Punkt ist, an dem die optische Achse der Kamera auf den Unterboden des Fahrzeugs trifft.

Die Sensor- bzw. Scanningeinheiten bekannter Systeme zur Erfassung des Unterbodens umfassen im Allgemeinen eine Kamera, deren Sichtstrahl über einen Spiegel auf den Unterboden des Fahrzeugs abgelenkt wird.

Abhängig von der Ausrichtung des Spiegels wird der Fahrzeugunterboden ggf. verzerrt dargestellt. Trifft der Sichtstrahl orthogonal auf den Unterboden des Fahrzeuges, kann der Unterboden direkt und verzerrungsfrei erfasst werden. Ansonsten müssen die perspektivisch verzerrten Bilder des Unterbodens in einem weiteren Verarbeitungsschritt rechnerisch entzerrt werden.

An die Erfassungsvorrichtung einer optischen Abtasteinheit sind demnach folgende Anforderungen zu stellen:
- Vollständige Erfassung der Breite des Unterbodens mit gleichartiger räumlicher Auflösung
- Verzerrungsfreie Abbildung des Unterbodens
- Adäquate Aufnahmefrequenz in Abhängigkeit der Überfahrgeschwindigkeit

Zusätzlich wird zur Erstellung eines Gesamtbildes ein Auswerteverfahren benötigt, welches die einzelnen erfassten Bilder überlappungsfrei zusammenfügt.

### Offenbarung der Erfindung:

Es ist eine Aufgabe der Erfindung, eine verbesserte Vorrichtung und eine verbessertes Verfahren zur optischen Aufnahme des Unterbodens eines Fahrzeugs bereitzustellen.

Die vorliegende Erfindung löst diese Aufgabe durch die Aufnahme eines streifenförmigen Bildes über die gesamte Breite des Fahrzeugunterbodens mit Hilfe multipler Spiegel.

Insbesondere umfasst die Erfindung eine Vorrichtung zur optischen Aufnahme des Unterbodens eines Fahrzeugs mit wenigstens einer Kamera, wobei die Vorrichtung wenigstens zwei Spiegel aufweist, die derart angeordnet und ausgerichtet sind, dass von der Kamera gleichzeitig Bilder mehrerer Bereiche des Unterbodens des Fahrzeugs aufnehmbar sind. Das Fahrzeug ist dabei vorzugsweise über den Spiegeln angeordnet.

In einem erfindungsgemäßen Verfahren zur optischen Aufnahme von Bildern des Unterbodens eines Fahrzeugs wird das Fahrzeug, vorzugsweise in Fahrzeuglängsrichtung, über eine erfindungsgemäße Vorrichtung bewegt, wobei eine Anzahl von Bildern, von denen jedes jeweils einen Teilbereich des Unterbodens des Fahrzeugs umfasst, von der Kamera aufgenommen werden.

Durch die erfindungsgemäße neue, vorteilhafte Anordnung der Spiegel lässt sich der Sichtbereich der wenigstens einen Kamera so ab- bzw. umlenken, dass mit einer einzigen Kamera gleichzeitig mehrere Bereiche des Unterbodens erfasst werden können.

Der Sichtbereich der Kamera wird durch die optische Ablenkung über die Spiegel optimiert.

Jede einzelne Spiegelfläche stellt dabei rechnerisch eine eigene "virtuelle Kamera" dar. Die Spiegelflächen sind relativ zueinander kalibriert, um aus den Abbildungen der einzelnen Spiegelflächen ein zusammenhängendes Bild des Unterbodens des Fahrzeugs zu schaffen.

Die Methoden zur Bestimmung der virtuellen Kameras sind aus der Messtechnik bekannt, wo z.B. so genannte Strahlenteiler, z.B. eines Spiegel-Stereoaufsatzes, Verwendung finden.

Die Kalibrierung der Spiegelablenkung ist als funktionale Erweiterung der geometrischen Abbildungsgleichungen der Strahlengänge zu betrachten.

In einer Ausführungsform sind die Spiegel in Längsrichtung des Fahrzeugs versetzt zueinander angeordnet. In einer weiteren Ausführungsform sind die Spiegel in Querrichtung des Fahrzeugs versetzt zueinander angeordnet.

Durch eine versetzte Anordnung der Spiegel wird verhindert, dass die Spiegel einander abschatten und den Sichtstrahl zwischen der Kamera und dem Unterboden des Fahrzeugs unterbrechen. Durch versetzt zueinander angeordnete Spiegel wird so ein vollständige Erfassung der Unterbodens des Fahrzeugs mit einer einzigen Kamera ermöglicht.

In einer Ausführungsform sind die Spiegel in einem Winkel von 45° zur Ebene des Fahrzeugunterbodens angeordnet und lenken den Sichtstrahl der Kamera um 90° auf den Unterboden des Fahrzeugs um.

Bei einer derartigen 90°-Umlenkung des Sichtstrahls werden die Bildbereiche des Unterbodens verzerrungsfrei von der Kamera erfasst, und ein Gesamtbild des Unterbodens lässt sich durch direktes Aneinanderfügen benachbarter Bildbereiche erzeugen. Insbesondere kann auf eine aufwendige optische Entzerrung der aufgenommenen Bilder verzichtet werden, wenn der Fahrzeugboden im Wesentlichen in einem rechten Winkel zu dem durch die Spiegel umgelenkten Sichtstrahl der Kamera ausgerichtet ist.

In einer Ausführungsform sind die Spiegel in einem Winkel von ungleich 45° zur Ebene des Fahrzeugbodens angeordnet, so dass sie den Sichtstrahl der Kamera um weniger oder mehr als 90° in Richtung auf den Unterboden des Fahrzeugs umlenken.

Bei einem derartigen schrägen, nicht rechtwinkligen Verlauf der Sichtstrahlen treten die Sichtstrahlen seitlich versetzt neben den Spiegeln aus der Vorrichtung aus, so dass Öffnungen, die in der Oberseite der Aufnahmevorrichtung ausgebildet sind, um den Austritt der Sichtstrahlen zu ermöglichen, nicht unmittelbar über den Spiegeln, sondern seitlich versetzt zu diesen angeordnet sind.

Eine derartige Anordnung, bei der die Öffnungen gegenüber den Spiegeln seitlich versetzt angeordnet sind, hat den Vorteil, dass die Spiegel auch bei nicht verglasten Öffnungen nicht übermäßig verschmutzt werden, da durch die Öffnungen herabfallende Schmutzpartikel nicht direkt auf die Spiegel, sondern neben diese fallen.

In einer Ausführungsform sind wenigstens zwei Spiegel derart angeordnet, dass wenigstens ein Bereich des Unterbodens des Fahrzeugs aus unterschiedlichen Perspektiven von der Kamera aufnehmbar ist. Durch eine derartige Anordnung von Spiegeln, bei der wenigstens ein Bereich des Unterbodens des Fahrzeugs aus verschiedenen Perspektiven aufgenommen wird, lässt sich mit nur einer einzigen Kamera eine kostengünstige 3D-Rekonstruktion wenigstens eines Bereichs des Unterbodens des Fahrzeugs realisieren.

In einer Ausführungsform ist die Kamera seitlich von der Längsachse des Fahrzeugs angeordnet, und die Spiegel sind quer zur Längsrichtung des Fahrzeugs angeordnet bzw. aufgereiht, so dass der Sichtstrahl der Kamera im Bereich zwischen der Kamera und den Spiegeln quer zur Längserstreckung bzw. Fahrtrichtung des Fahrzeugs ausgerichtet ist.

Mit einer derartig quer zur Längserstreckung des Fahrzeugs ausgerichteten Anordnung der Kamera und Spiegel lässt sich eine Aufnahmevorrichtung mit einer besonders kompakten Bauweise verwirklichen und die Sensorfläche der Kamera kann optimal ausgenutzt werden.

In einer Ausführungsform eines erfindungsgemäßen Verfahrens werden Bilder von Teilbereichen des Unterbodens des Fahrzeugs mit einer adäquaten, auf die Bewegungsgeschwindigkeit des Fahrzeugs abgestimmten Frequenz aufgenommen und nach und nach wird der der gesamte Unterboden des Fahrzeugs erfasst.

Die jeweils von Teilbereichen des Unterbodens des Fahrzeugs aufgenommenen Bilder werden zu einem Gesamtbild zusammengesetzt. Die Komplexität der Erzeugung des Gesamtbildes hängt dabei von den Abbildungsperspektiven ab.

Die Erfindung wird im Folgenden anhand der beigefügten Figuren näher erläutert. Dabei zeigt:
Fig. 1 eine schematische Seitenansicht einer herkömmlichen Aufnahmevorrichtung zur optischen Aufnahme des Unterbodens eines Fahrzeugs;
Fig. 2 eine schematische Draufsicht auf ein Ausführungsbeispiel einer erfindungsgemäße Aufnahmevorrichtung;
Fig. 3 eine schematische Schnittansicht eines ersten Ausführungsbeispiels einer erfindungsgemäßen Aufnahmevorrichtung; und
Fig. 4 eine schematische Schnittansicht eines zweiten Ausführungsbeispiels einer erfindungsgemäßen Aufnahmevorrichtung.

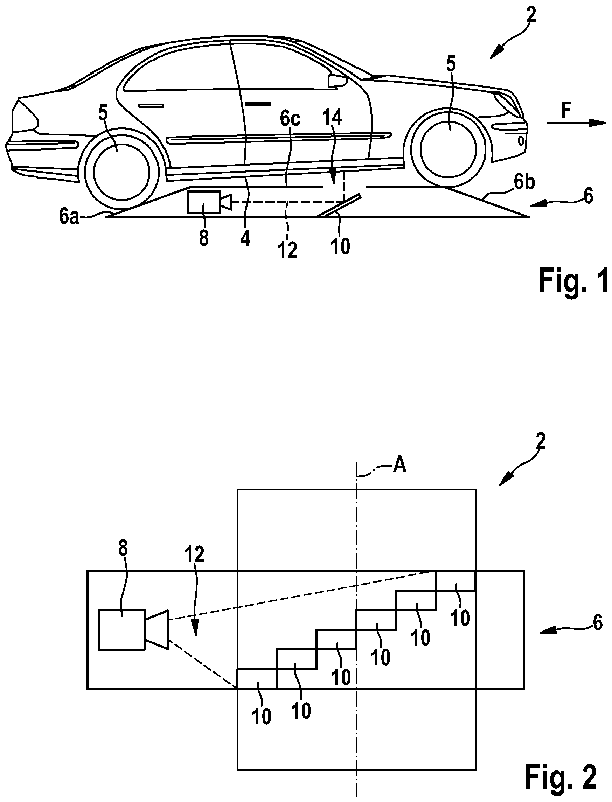

Fig. 1 zeigt eine schematische Seitenansicht einer herkömmlichen Aufnahmevorrichtung 6 zur optischen Aufnahme des Unterbodens 4 eines Fahrzeugs 2.

Innerhalb der Aufnahmevorrichtung 6 ist eine Kamera 8 angeordnet, die zur Aufnahme von Bildern des Unterbodens 4 eines Fahrzeugs 2, das über die Aufnahmevorrichtung 6 bewegt wird, ausgebildet ist.

Dazu ist auf einer dem Unterboden 4 des Fahrzeugs 2 zugewandten Oberseite 6c der Aufnahmevorrichtung 6 eine Öffnung 14 ausgebildet. Unterhalb der Öffnung 14 ist innerhalb der Aufnahmevorrichtung 6 ein Spiegel 10 derart angeordnet, dass der Spiegel 10 einen Sichtstrahl 12 der Kamera 8 durch die Öffnung 14 auf den Unterboden 4 des Fahrzeugs 2 umlenkt bzw. ein Bild eines Bereich des Unterbodens 4 des Fahrzeugs 2 in das Objektiv der Kamera 8 projiziert.

Wird das Fahrzeug 2 in Fahrtrichtung F, z.B. von links nach rechts, über die Aufnahmevorrichtung 6 bewegt, werden nacheinander verschiedene streifenförmige Bereiche des Unterbodens 4 des Fahrzeugs 2 von dem Spiegel 10 in die Kamera 8 projiziert, und die Kamera 8 nimmt nacheinander streifenförmige Bilder des Unterbodens 4, die sich jeweils über die gesamte Breite des Fahrzeugs 2 erstrecken, auf. Die streifenförmigen Bilder werden von einer in den Figuren nicht gezeigten Auswerteinrichtung zu einem vorzugsweise lückenlosen Gesamtbild des Unterbodens 4 des Fahrzeugs 2 zusammengesetzt und über eine geeignete Ausgabevorrichtung, wie z.B. einen Bildschirm und/oder einen Drucker, ausgegeben. Es kann auch eine Speichervorrichtung vorgesehen sein, um die Bilder zur Archivierung und/oder späteren Auswertung zu speichern.

Die Kamera 8 und der Spiegel 10 sind dabei so angeordnet, dass der Sichtstrahl 12 der Kamera 8 im Bereich zwischen der Kamera 8 und dem Spiegel 10 im Wesentlichen parallel zur Längsachse des Fahrzeugs 2 verläuft.

In dem in der Fig. 1 gezeigten Ausführungsbeispiel ist die Aufnahmevorrichtung 6 schwellenförmig ausgebildet, so dass die Räder 5 des Fahrzeugs 2 über schräge Rampenbereiche 6a, 6b auf die Aufnahmevorrichtung 6 bzw. von ihr herunter rollen. Alternativ kann die Aufnahmevorrichtung 6 auch derart in den Werkstattboden integriert sein, dass die Oberseite 6c der Aufnahmevorrichtung 6 niveaugleich mit dem Werkstattboden angeordnet ist und schräge Rampenbereiche 6a, 6b vermieden werden können.

Fig. 2 zeigt eine schematische Draufsicht auf ein Ausführungsbeispiel einer erfindungsgemäße Aufnahmevorrichtung 6, auf der sich ein ebenfalls schematisch in Form seines Umrisses dargestelltes Fahrzeug 2 befindet.

Bei einer Aufnahmevorrichtung 6 gemäß dem in der Figur 2 gezeigten Ausführungsbeispiel ist die Kamera 8 seitlich von dem Fahrzeug 2 angeordnet und der Sichtstrahl 12 der Kamera 8 verläuft im Wesentlichen quer zur Längsachse A des Fahrzeugs 2.

Unterhalb des Fahrzeugs 2 sind mehrere Spiegel 10 angeordnet. Die Spiegel 10 sind in Längs- und Querrichtung des Fahrzeugs 2 versetzt zueinander angeordnet und projizieren jeweils einen Bereich des Sichtstrahles 12 der Kamera 8 auf einen zugehörigen Bereich des Unterbodens 4 des Fahrzeugs 2 bzw. bilden einen Bereich des Unterbodens 4 des Fahrzeugs 2 in das Sichtfeld der Kamera 8 ab.

Die Spiegel 10 sind dabei so angeordnet, dass sie gemeinsam die gesamte Breite des Unterbodens 4 des Fahrzeugs 2 erfassen und in das Sichtfeld 12 der Kamera 8 projizieren.

Bewegt sich das Fahrzeug 2 in Fahrtrichtung F im Wesentlichen parallel zu seiner Längsachse A über die Aufnahmevorrichtung 6, wird nacheinander jeweils ein anderer Bereich des Unterbodens 4 des Fahrzeugs 2 von wenigstens einem der Spiegel 10 in das Sichtfeld 12 der Kamera 8 projiziert, so dass während der Bewegung des Fahrzeugs 2 nach und nach der gesamte Unterboden 4 von der Kamera 8 erfasst wird.

Die Anordnung der Kamera 8 seitlich vom dem Fahrzeug 2 und der Querverlauf des Sichtfeldes bzw. der Sichtstrahlen 12 ermöglichen eine besonders kompakte Bauweise des Systems aus Spiegeln 10 und Kamera 8.

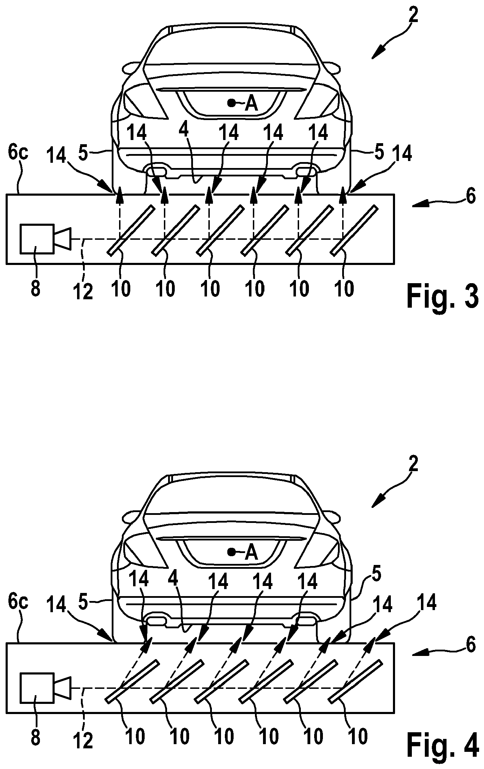

Fig. 3 zeigt eine schematische Schnittansicht eines ersten Ausführungsbeispiels einer erfindungsgemäßen Aufnahmevorrichtung 6 mit Blickrichtung parallel zur Längsachse A bzw. in Fahrtrichtung F des Fahrzeugs 2. Unterhalb des Fahrzeugs 2 mit dem Unterboden 4 und den Rädern 5 ist die Aufnahmevorrichtung 6 mit der Kamera 8, und, in diesem Ausführungsbeispiel, sechs versetzt zueinander angeordneten Spiegeln 10 erkennbar.

Die Spiegel 10 sind dabei derart, insbesondere in einem Winkel von 45° zur Horizontalen, angeordnet, dass sie das Sichtfeld bzw. die Sichtstrahlen 12 der Kamera 8 um 90° aus der Horizontalen nach oben in Richtung auf den Unterboden 4 des Fahrzeugs 2 umlenken.

Das heißt, dass in diesem Ausführungsbeispiel die zunächst waagerecht, parallel zum Unterboden 4 des Fahrzeugs 2 verlaufenden Sichtstrahlen 12 in einem rechten Winkel nach oben in Richtung auf das Fahrzeug 2 abgelenkt werden und durch in der Oberseite 6c der Aufnahmevorrichtung 6 ausgebildete Öffnungen 14, die unmittelbar über dem jeweils zugehörigen Spiegel 10 angeordnet sind, aus der Aufnahmevorrichtung 6 austreten, so dass jeweils ein Bild eines mit dem jeweiligen Spiegel 10 korrespondierenden (Teil-)Bereichs des Unterbodens 4 des Fahrzeugs 2 in die Kamera 8 projiziert wird.

Eine derartige Anordnung der Spiegel 10 in einem Winkel von 45° zur Horizontalen hat den Vorteil, dass die Bereiche des Unterbodens 4 verzerrungsfrei abgebildet werden und sich ein Gesamtbild des Unterbodens 4 durch direktes Aneinanderfügen benachbarter Bildbereiche erzeugen lässt, wenn der Unterboden 4 im Wesentlichen horizontal parallel zur Oberseite 6c der Aufnahmevorrichtung ausgerichtet ist. Insbesondere kann auf eine aufwendige Entzerrung der aufgenommenen Bilder verzichtet werden.

Fig. 4 zeigt ein alternatives Ausführungsbeispiel, in dem die Spiegel 10 nicht in einem 45°-Winkel zur Horizontalen ausgerichtet sind, so dass sie die Sichtstrahlen 12 der Kamera 8 in einem Winkel ablenken, der ungleich 90° ist.

Da die Sichtstrahlen 12 in diesem Ausführungsbeispiel schräg, d.h. nicht in einem rechten Winkel, abgelenkt werden, treten sie schräg, d.h. in einem spitzen Winkel, durch die Öffnungen 14, die in der Oberseite 6c der Aufnahmevorrichtung 6 ausgebildet sind, aus der Aufnahmevorrichtung 6 aus. Insbesondere treten die Sichtstrahlen 12 nicht unmittelbar senkrecht über, sondern seitlich neben den Spiegeln 10 aus der Vorrichtung 6 aus; und die Öffnungen 14, die in der Oberseite 6c der Aufnahmevorrichtung 6 ausgebildet sind, um das Austreten der Sichtstrahlen 12 zu ermöglichen, sind nicht senkrecht über den Spiegeln 10 sondern seitlich versetzt zu diesen angeordnet.

Eine derartige, seitlich versetzte Anordnung der Öffnungen 14 hat den Vorteil, dass die Spiegel 10 auch bei nicht verglasten Öffnungen 14 nicht unmittelbar verschmutzt werden, da ggf. durch die Öffnungen 14 herab fallende Schmutzpartikel nicht direkt auf die Spiegel 10 sondern seitlich neben diese fallen.

Die durch den schrägen Verlauf der Sichtstrahlen 12 verursachte Verzerrung der von der Kamera 8 aufgenommenen Bilder des Unterbodens 4 wird rechnerisch korrigiert, bevor die Bilder zu einem Gesamtbild des Unterbodens 4 zusammengesetzt werden.

Durch eine geeignete Ausrichtung der Spiegel 10 können auch schwer einsehbare Bereiche des Unterbodens 4 des Fahrzeugs 2 von der Kamera 8 erfasst und überwacht werden.

In einem weiteren, in den Figuren nicht gezeigten Ausführungsbeispiel sind wenigsten einige Spiegel 10 derart angeordnet, dass wenigstens ein Bereich des Unterbodens 4 gleichzeitig aus verschiedenen Perspektiven in die Kamera 8 projiziert wird und so mit einer einzigen Kamera 8 gleichzeitig aus verschiedenen Perspektiven betrachtet werden kann. Dadurch lässt sich mit nur einer einzigen Kamera 8 kostengünstig eine 3D-Rekonstruktion wenigstens eines Bereichs des Unterbodens 4 des Fahrzeugs 2 realisieren.

## Patentansprüche

1. Vorrichtung (6) zur optischen Aufnahme eines Unterbodens (4) eines Fahrzeugs (2) mit wenigstens einer Kamera (8),
**dadurch gekennzeichnet, dass** die Kamera (8) seitlich von dem Fahrzeug angeordnet ist und der Sichtstrahl der Kamera im Wesentlichen quer zur Längsachse des Fahrzeugs (2) verläuft, und dass die Vorrichtung (6) wenigstens zwei Spiegel (10) aufweist, die derart angeordnet und ausgerichtet sind, dass von der Kamera (8) gleichzeitig Bilder mehrerer Bereiche des Unterbodens (4) des Fahrzeugs (2) aufnehmbar sind, wobei die Spiegel (10) in Längs- und Querrichtung gegeneinander versetzt sind.

2. Vorrichtung (6) nach nach Anspruch 1 **dadurch gekennzeichnet, dass** die Spiegel (10) in einem Winkel von 45° zur Ebene des Unterbodens (4) des Fahrzeugs (2) angeordnet sind.

3. Vorrichtung (6) nach Anspruch 1 oder 2 **dadurch gekennzeichnet, dass** die Spiegel (10) in einem Winkel ungleich 45° zur Ebene des Unterbodens (4) des Fahrzeugs (2) angeordnet sind.

4. Vorrichtung (6) nach einem der vorangehenden Ansprüche,
**dadurch gekennzeichnet, dass** wenigstens zwei Spiegel (10) derart angeordnet sind, dass wenigstens ein Bereich des Unterbodens (4) des Fahrzeugs (2) aus unterschiedlichen Perspektiven von der Kamera (8) aufnehmbar ist.

5. Vorrichtung (6) nach einem der vorangehenden Ansprüche,
**dadurch gekennzeichnet, dass** die Kamera (8) seitlich der Längsachse des Fahrzeugs (2) angeordnet ist und die Spiegel (10) im Wesentlichen quer zur Längsrichtung des Fahrzeugs (2) angeordnet sind.

6. Verfahren zur optischen Aufnahme von Bildern des Unterbodens (4) eines Fahrzeugs (2) durch Bewegen des Fahrzeugs (2) über eine Vorrichtung (6) nach einem der vorangehenden Ansprüche,
**dadurch gekennzeichnet, dass** jeweils Bilder von Teilbereichen des Unterbodens (4) des Fahrzeugs (2) von der Kamera (8) aufgenommen werden.

7. Verfahren nach Anspruch 6 **dadurch gekennzeichnet, dass** die Bilder mit einer adäquaten Frequenz aufgenommen werden.

8. Verfahren nach Anspruch 6 oder 7 **dadurch gekennzeichnet, dass** die Bilder von Teilbereichen des Unterbodens (4) des Fahrzeugs (2) zu einem Gesamtbild zusammengesetzt werden.

## Claims

1. Apparatus (6) for optically recording an underfloor (4) of a vehicle (2), having at least one camera (8),
**characterized in that** the camera (8) is arranged laterally of the vehicle and the view ray of the camera extends substantially transversely with respect to the longitudinal axis of the vehicle (2), and **in that** the apparatus (6) has at least two mirrors (10), which are arranged and aligned such that images of a plurality of regions of the underfloor (4) of the vehicle (2) are able to be recorded at the same time by the camera (8), wherein the mirrors (10) are offset in the longitudinal and transverse direction.

2. Apparatus (6) according to Claim 1,
**characterized in that** the mirrors (10) are arranged at an angle of 45° with respect to the plane of the underfloor (4) of the vehicle (2).

3. Apparatus (6) according to Claim 1 or 2,
**characterized in that** the mirrors (10) are arranged at an angle other than 45° with respect to the plane of the underfloor (4) of the vehicle (2).

4. Apparatus (6) according to one of the preceding claims,
**characterized in that** at least two mirrors (10) are arranged such that at least one region of the underfloor (4) of the vehicle (2) is able to be recorded by the camera (8) from different perspectives.

5. Apparatus (6) according to one of the preceding claims,
**characterized in that** the camera (8) is arranged laterally of the longitudinal axis of the vehicle (2) and the mirrors (10) are arranged substantially transversely with respect to the longitudinal direction of the vehicle (2).

6. Method for optically recording images of the underfloor (4) of a vehicle (2) by moving the vehicle (2) over an apparatus (6) according to one of the preceding claims,
**characterized in that** in each case images of partial regions of the underfloor (4) of the vehicle (2) are recorded by the camera (8).

7. Method according to Claim 6,
**characterized in that** the images are recorded with an adequate frequency.

8. Method according to Claim 6 or 7,
**characterized in that** the images of partial regions of the underfloor (4) of the vehicle (2) are combined to form an overall image.

## Revendications

1. Dispositif (6) destiné à l'acquisition optique d'un dessous de carrosserie (4) d'un véhicule (2) comportant au moins une caméra (8), **caractérisé en ce que** la caméra (8) est disposée latéralement par rapport au véhicule et **en ce que** l'axe de visée de la caméra s'étend sensiblement transversalement à l'axe longitudinal du véhicule (2), et **en ce que** le dispositif (6) comporte au moins deux miroirs (10) qui sont disposés et orientés de manière à ce que des images de plusieurs régions du dessous de carrosserie (4) du véhicule (2) puissent être simultanément acquises par la caméra (8), dans lequel les miroirs (10) sont décalés l'un par rapport à l'autre dans les directions longitudinale et transversale.

2. Dispositif (6) selon la revendication 1, **caractérisé en ce que** les miroirs (10) sont disposés en formant un angle de 45° par rapport au plan du dessous de carrosserie (4) du véhicule (2).

3. Dispositif (6) selon la revendication 1 ou 2, **caractérisé en ce que** les miroirs (10) sont disposés en formant un angle différent de 45° par rapport au plan du dessous de carrosserie (4) du véhicule (2).

4. Dispositif (6) selon l'une quelconque des revendications précédentes, **caractérisé en ce qu'**au moins deux miroirs (10) sont disposés de manière à ce qu'au moins une région du dessous de carrosserie (4) du véhicule (2) puisse être acquise par la caméra (8) selon des perspectives différentes.

5. Dispositif (6) selon l'une quelconque des revendications précédentes, **caractérisé en ce que** la caméra (8) est disposée latéralement par rapport à l'axe longitudinal du véhicule (2) et **en ce que** les miroirs (10) sont disposés sensiblement transversalement à la direction longitudinale du véhicule (2).

6. Procédé destiné à l'acquisition optique d'images du dessous de carrosserie (4) d'un véhicule (2) par déplacement du véhicule (2) au-dessus d'un dispositif (6) selon l'une quelconque des revendications précédentes, **caractérisé en ce que** des images de sections du dessous de carrosserie (4) du véhicule (2) sont respectivement acquises par la caméra (8).

7. Procédé selon la revendication 6, **caractérisé en ce que** les images sont acquises à une fréquence adéquate.

8. Procédé selon la revendication 6 ou 7, **caractérisé en ce que** les images des sections du dessous de carrosserie (4) du véhicule (2) sont combinées en une image globale.
